# EUROPÄISCHE PATENTSCHRIFT

(11) **EP 3 150 330 B1**
(45) Veröffentlichungstag und Bekanntmachung des Hinweises auf die Patenterteilung: **14.03.2018**
(21) Anmeldenummer: 16191474.2
(22) Anmeldetag: 29.09.2016
(51) Int. Cl.: B23Q 11/08, B23Q 17/24, E06B 9/00, F16J 3/00, F16P 3/02

(54) **LÄNGENVARIABLE SCHUTZABDECKUNG FÜR ARBEITSRÄUME VON WERKZEUGMASCHINEN MIT EINER BELEUCHTUNGSEINRICHTUNG**
LENGTH VARIABLE GUARD FOR WORK SPACES OF MACHINE TOOLS WITH AN ILLUMINATING DEVICE
CAPOT DE PROTECTION DE LONGUEUR VARIABLE POUR LES ESPACES DE TRAVAIL DE MACHINES-OUTILS AVEC UN DISPOSITIF D'ILLUMINATION

(30) Priorität: 02.10.2015 DE 202015105216 U
(43) Veröffentlichungstag der Anmeldung: 05.04.2017
(73) Patentinhaber: HEMA Maschinen- und Apparateschutz GmbH, 63500 Seligenstadt (DE)
(72) Erfinder: Najorka, Lars, 63225 Langen (DE)
(74) Vertreter: Patentanwälte Olbricht Buchhold Keulertz

(56) Entgegenhaltungen:
- EP-A1- 2 816 429
- DE-A1- 3 532 702
- DE-U1-202013 104 207

## Beschreibung

Die vorliegende Erfindung befasst sich mit einer längenvariablen Schutzabdeckung für Arbeitsräume von Werkzeugmaschinen mit einer Vielzahl von Tragleisten, die an wenigstens einer seitlichen Führungsschiene geführt sind, sowie zwischen den Tragleisten vorgesehenen Abdeckelementen, die faltbar oder teleskopierbar ausgebildet sind, um eine Längenänderung zwischen einer eingefahrenen, komprimierten Stellung der Schutzabdeckung und einer ausgezogenen Schutzstellung zu ermöglichen. Eine solche Schutzabdeckung ist z.B. aus dem Patentdokument DE 35 32 702 bekannt. Derartige Schutzabdeckungen können in der Praxis erhebliche Ausmaße annehmen, wobei als Beispiel Portalfräsmaschinen genannt werden können, bei denen Abmessungen von 5x10m für eine Schutzdeckung des Arbeitsraumes nicht ungewöhnlich sind. Da aufgrund der hohen Bearbeitungsgeschwindigkeiten und hohen Drehzahlen die Späne auch über seitliche Abdeckungen hinaus geschleudert werden können und auch Kühlschmierstoff zum Teil als Aerosol in die Umgebung gelangen kann, werden die Arbeitsräume in der Regel auch mit Dachabdeckungen überdacht. Bei derartig voll umschlossenen Arbeitsräumen besteht dann allerdings ein Problem, dass der Lichteinfall in den Arbeitsraum unterbunden wird, so dass die Beobachtung der Abläufe durch den Maschinenführer erschwert ist.

Selbstverständlich ist es ohne weiteres möglich, innerhalb des Arbeitsraumes elektrische Beleuchtungsvorrichtungen vorzusehen, allerdings sind diese einschließlich der elektrischen Verkabelung den Einflüssen der umherfliegenden Späne und des Kühlschmiermittels ausgesetzt. Zudem können die Halterungen oder Kabel Schlagschatten werfen, die wiederum die Beobachtung erschweren können.

Erschwert ist insbesondere eine Beleuchtung von oben, da die dann vorgesehenen Traversen für die Beleuchtungseinrichtungen das Beladen beispielsweise einer Portalfräsmaschine bei schweren oder großen Werkstücken mit Hilfe eines Krans behindern.

Es sind auch bereits Lösungen bekannt, bei welchen insbesondere die Dachabdeckungen aus einem transparenten Material hergestellt werden, um auf diese Weise einen Lichteinfall in den Arbeitsraum bei geschlossener Abdeckung zu ermöglichen (siehe z.B. Patentdokument DE 20 2013 104 207 U). Auf diese Weise wird zwar ein Lichteinfall der Hallenbeleuchtung in den Arbeitsraum ermöglicht, allerdings muss diese auch besonders stark sein und insbesondere werden die Tücher oder Behänge der Abdeckungen nach einigen Monaten schmutzig oder verändern durch die eingesetzten Kühl-Schmierstoffe ihre Lichtdurchlässigkeit. Die innenseitige Reinigung der Abdeckung ist aber sehr aufwendig, wobei im Falle einer Eintrübung ein sehr aufwendiger und teurer Austausch der transparenten Abdeckbahnen erforderlich ist.

Die Aufgabe der vorliegenden Erfindung besteht darin, eine längenvariable Schutzabdeckung für Arbeitsräume von Werkzeugmaschinen zu schaffen, die eine bessere Ausleuchtung des Arbeitsraumes einer Werkzeugmaschine ermöglicht als bisherige Lösungen.

Erfindungsgemäß wird die Aufgabe durch eine längenvariable Schutzabdeckung der eingangs genannten Art gelöst, bei welcher wenigstens einige Tragleisten mit Beleuchtungseinrichtungen versehen sind, die in die Richtung des Arbeitsraumes Licht abstrahlen.

Die erfindungsgemäße Lösung hat den Vorteil, dass sich durch die Anordnung von Beleuchtungseinrichtungen in den Leisten oder an einem Teil der Leisten eine gleichmäßige Beleuchtung des Arbeitsraumes erreichen lässt. Insbesondere bei einer Dachabdeckung können die Beleuchtungseinrichtungen von oben in den Arbeitsraum einstrahlen, wodurch eine besonders gleichmäßige Ausleuchtung erreicht wird. Die Beleuchtungseinrichtungen selbst sind im Vergleich zu transparenten Schutzabdeckungen kleinflächig und lassen sich im Bedarfsfall schnell und einfach reinigen. Die Anordnung der Beleuchtungseinrichtungen kann auch im Hinblick auf den Arbeitsraum der jeweiligen Werkzeugmaschinen bereits so gewählt sein, dass die Ausbildung von Schlagschatten durch Teile der Werkzeugmaschine im Vorfeld vermieden wird.

Vorzugsweise weisen die Beleuchtungseinrichtungen LED-Leisten oder einzelne LED-Leuchten auf, die an der dem Arbeitsraum zugewandten Seite der jeweiligen Tragleisten angeordnet sind.

LED-Leisten haben den Vorteil eines besonders niedrigen Energieverbrauchs, so dass sie über eine Stromzuleitung oder auch über geeignete Stromspeicher mit Strom versorgt werden können, die beispielsweise in einer komprimierten Stellung der Abdeckung aufgeladen werden, wenn entsprechende Ladekontakte geschaltet sind. Die LED-Leisten oder sonstigen LED-Leuchten können dabei in die Tragleisten eingelassen oder außen auf diesen montiert sein, wobei diese Art der Montage selbstverständlich auch für andere Beleuchtungseinrichtungen möglich ist. Es können aber auch OLED-Leuchtelemente oder konventionelle Leuchtmittel, wie z. B. Glühdraht- oder Gasentladungslampen eingesetzt werden.

Vorzugsweise sind elektrische Zuleitungen zu den Beleuchtungseinrichtungen vorgesehen, die durch die Tragleisten von den geschützten Außenseiten der Schutzabdeckung zu den Beleuchtungseinrichtungen geführt sind. Durch diese Zuführung ist ausgeschlossen, dass die elektrischen Zuleitungen im Arbeitsraum Schatten werfen können, wobei sie auch vor Spänen und Kühlschmiermittel geschützt sind.

Die Stromversorgung zu den Zuleitungen kann vorzugsweise in der Weise gelöst sein, dass an einer Anschlussseite der Schutzabdeckung ein Flansch mit einem elektrischen Anschluss vorgesehen ist, von welchem aus flexible elektrische Leitungen zu den Tragleisten vorgesehen sind, die mit Beleuchtungseinrichtungen versehen sind. Die unmittelbare Verdrahtung zu den im ausgefahrenen Zustand sehr weit entfernt von dem Flansch liegenden Tragleisten erfolgt vorzugsweise in der Weise, dass mehrere flexible elektrische Leitungen in Reihe zwischen den Tragleisten mit oder ohne Beleuchtungseinrichtungen vorgesehen sind. Dadurch werden an den bewegten Tragleisten quasi Fixpunkte geschaffen, so dass die beim Zusammenfahren bzw. Auseinanderziehen der Schutzabdeckung durch die elektrischen Zuleitungen auszugleichenden Wegänderungen ein bestimmtes Maß nicht überschreiten. Die Verdrahtung kann in der Weise bevorzugt vorgenommen sein, dass die elektrischen Anschlussleitungen an den Tragleisten mit Beleuchtungseinrichtungen zu diesen verzweigen und / oder zu den elektrischen Zuleitungen in die sich anschließenden weiteren Tragleisten mit Beleuchtungseinrichtungen geführt sind. Alternativ zu einer Durchführung der elektrischen Leitungen durch die Tragprofile können auch Lichtleitelemente durch die Tragprofile geführt sein, d. h. die Lichtquellen sitzen bezogen auf den Arbeitsraum auf der Außenseite und das Licht wird dann über die Lichtleiter zur Innenseite geführt und dort durch eine entsprechende Optik in den Innenraum gestrahlt.

In einer bevorzugten Ausführungsform der Erfindung ist vorgesehen, dass die elektrischen Anschlussleitungen in flexiblen Schutzummantelungen geführt sind. Hierdurch wird ein unkontrolliertes Ausweichen der elektrischen Leitungen vermieden, indem beispielsweise die Schutzummantelungen nur einen definierten Biegefreiheitsgrad haben. Als Beispiel für derartige Schutzummantelungen ist eine Ausführungsform bevorzugt, bei welcher die biegeflexible Schutzabdeckung in der Art einer Gliederkette mit einem inneren Hohlraum gebildet sind, in dem die flexiblen elektrischen Leitungen angeordnet sind. Derartige Gliederketten lassen beim Zusammen- und Auseinanderfahren der Schutzabdeckung nur eine definierte Bewegung mit einem ausreichend großen Biegeradius zu, der eine Beschädigung der elektrischen Leitungen auch unter raschen Bewegungen und bei großen Beschleunigungen vermeidet.

Bei sehr großflächigen Schutzabdeckungen, insbesondere Dachabdeckungen ist es bevorzugt, dass die Abdeckelemente aus flexiblen Planen, Folien oder Geweben bestehen, die sich beim Zusammenfahren der Schutzabdeckung zu Falten zusammenlegen oder schlaufenförmig ausweichen können. Derartige Abdeckelemente sind besonders leicht, so dass auch große Spannweiten mit entsprechend großen Längen der Tragleisten überdacht werden können.

Alternativ können die Abdeckelemente auch aus Lamellen bestehen, die mit ihren Schenkeln die Schenkel benachbarte Lamellen teleskopierbar überlappen. Derartige Schutzabdeckungen sind ebenfalls bekannt, und haben ein etwas höheres Gewicht als die zuvor beschriebene Ausführungsform mit tuchartigen Abdeckelementen, sind dafür aber entsprechend robuster.

In einer weiteren bevorzugten Ausführungsform der Erfindung ist vorgesehen, dass die Beleuchtungseinrichtungen in den Tragleisten wenigstens teilweise individuell ansteuerbar sind. Auf diese Art und Weise ist es möglich, die aktivierten Beleuchtungseinrichtungen beispielsweise an ein Werkstück anzupassen, das in dem Arbeitsraum bearbeitet werden soll. Dadurch ist es immer möglich, die Bearbeitungsstellen zielgerichtet anzustrahlen und eine Schlagschattenbildung durch das Werkstück zu vermeiden. Wie bereits erwähnt, eignet sich die erfindungsgemäße Lösung insbesondere für Dachabdeckungen mit zwei seitlichen Führungsschienen, auf denen die Tragleisten auf seitlichen Rollen geführt sind, wobei zwischen den Tragleisten flexible Abdeckelemente angeordnet sind.

Nachfolgend wird anhand der beigefügten Zeichnungen näher auf ein Ausführungsbeispiel der Erfindung eingegangen. Es zeigen:
Fig. 1 eine längenvariable Schutzabdeckung von der Außenseite;
Fig. 2 eine vergrößerte Einzelheit Y aus Fig. 1;
Fig. 3 eine Ansicht der Schutzabdeckung;
Fig. 4 eine vergrößerte Einzelheit Z aus Fig. 3;
Fig. 5 teilweise geschnittene Ansicht eines Tragprofils der Schutzabdeckung nach Fig. 1 bis 5.

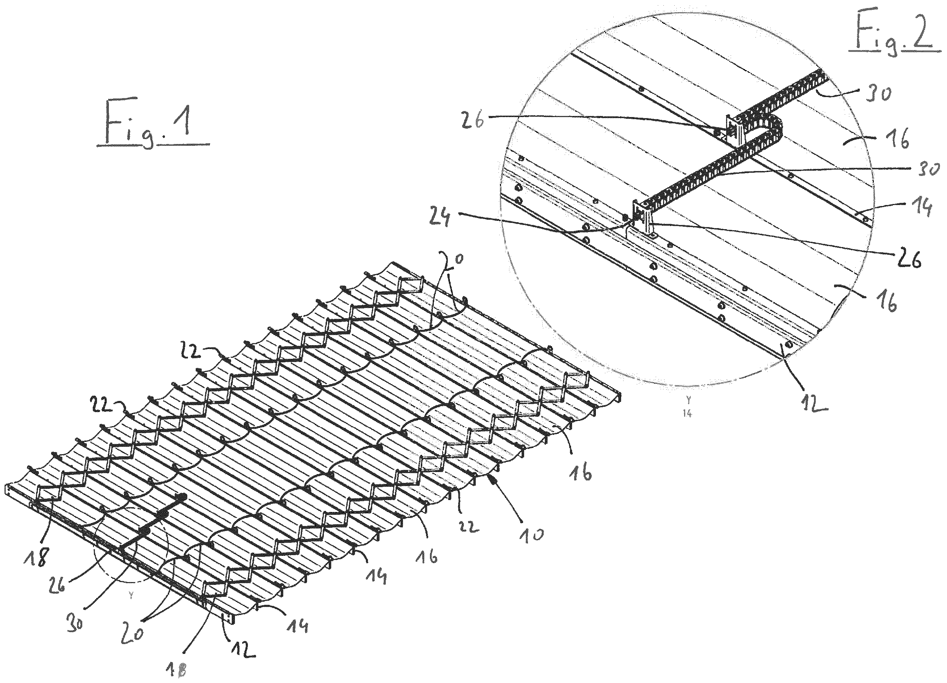

In Fig. 1 ist eine Schutzabdeckung 10 für den Arbeitsraum einer Werkzeugmaschine dargestellt. Diese Schutzabdeckung ist als Dachabdeckung konzipiert und in Fig. 1 von der Außenseite her dargestellt, d.h. der schützende Arbeitsraum liegt unterhalb der in Fig. 1 dargestellten Schutzabdeckung 10. Die Schutzabdeckung 10 besitzt auf der Festanschlussseite eine Flanschleiste 12, an die sich eine Vielzahl parallel zueinander angeordneter Tragleisten 14 anschließt, die jeweils über flexible Tuchabschnitte 16 miteinander verbunden sind. Als Material für die Tuchabschnitte eignen sich verschiedene Arten von Folien, Geweben, Planen oder mehrlagige Flächengebilde. Die Abdeckelemente 16 sollen die Eigenschaft haben, sich bei einem Zusammenfahren des Behangs aus der in Fig. 1 ausgezogenen Schutzstellung schlaufen- oder faltenartig zusammenlegen, so dass das Einfahren des Behangs nicht behindert wird.

Die Tragleisten 14 sind durch zwei Scherenmechanismen 18 miteinander verbunden und zusätzlich stabilisiert, so dass sie sich nicht seitlich zur Ausfahrrichtung verlagern. Zwischen den Tragleisten 14 sind ferner flexible Zugelemente 20 vorgesehen, die den maximal Abstand zwischen zwei Tragleisten bzw. der Flanschleiste und der ersten Tragleiste 14 begrenzen.

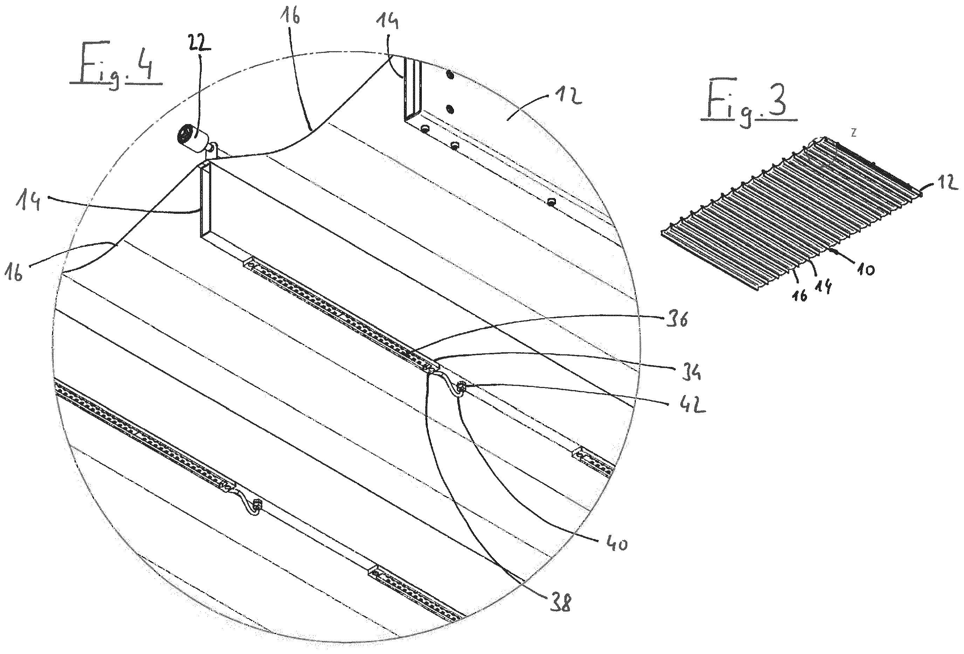

Die Tragleisten 14 sind an seitlichen Führungseinrichtungen (nicht gezeigt) mit Hilfe von Führungsrollen 22 geführt (siehe auch Fig. 4).

Die Tragprofile 14 sind als Aluminium-Hohlprofile ausgebildet, wie ebenfalls aus Fig. 4 gut zu erkennen ist. An der genannten Festanschlussleiste 12 ist die Flanschleiste 12 beispielsweise mit einem Aluminiumtragprofil 14 verschraubt, um die notwendige Stabilität für den Festanschluss auf der Maschinenseite zu gewährleisten.

In Fig. 2 ist auf der Festanschlussseite 12 ein elektrischer Anschluss 24 an einer Halterung 26 gezeigt, der mit einer Stromversorgung der Maschine Verbunden ist. Von dem elektrischen Anschluss 24 aus, führen elektrische Anschlussleitungen, zu den nachfolgenden Trageleisten 14 und sind dabei mit Hilfe sogenannter Energieführungsketten 30 zwischen den einzelnen Tragleisten geführt, um eine Beschädigung der elektrischen Anschlussleitungen in Folge der Bewegungen bei einem Ein- und Ausfahren der Schutzabdeckung 10 zu vermeiden. Wie der Einzelheit Y in Fig. 2 gut zu entnehmen ist, verbindet eine derartige Energieführungskette 30 jeweils zwei Halterungen 26, die an benachbarten Tragleisten 14 zur Außenseite hin angebracht sind. An den Halterungen 26 schließt sich dann eine weitere Energieführungskette 30 zum Verbinden mit einer Halterung 26 an der nachfolgenden Tragleiste an. In Fig. 1 sind der besseren Übersichtlichkeit halber nur die Energieführungsketten 30 und Halterungen 26 an der Festanschlussleiste 12 sowie den ersten drei Tragleisten 14 dargestellt, die Energieführungsketten 30 können sich jedoch im Bedarfsfall bis zu der letzten Tragleiste 14 am frei beweglichen Ende der Schutzabdeckung 10 fortsetzen.

Im Bereich der Halterungen 26 verzweigen sich die elektrischen Leitungen derart, dass an den Tragleisten, an welchen eine Beleuchtungseinrichtung 34 vorgesehen ist, auf die nachfolgend noch näher eingegangen wird, eine Zuleitung durch das Hohlprofil der jeweiligen Tragleiste 14 geführt ist. Im Übrigen setzt sich die elektrische Verbindung dann durch die Leitungen in der nachfolgenden Energieführungskette 30 fort.

Während Fig. 3 die Schutzabdeckung 10 schematisch in einer Ansicht vom Arbeitsraum einer Werkzeugmaschine aus zeigt, sind in Fig. 4 die Einzelheiten der Beleuchtungseinrichtungen 34 zu erkennen, die an den Unterseiten der Tragprofile 14 in Form von LED-Leisten 36 ausgebildet sind, die mit einem Gehäuse 38 an den Schmalseiten der Tragleisten 14 angebracht sind. Elektrische Zuleitungen 40, die ggf. zumindest im Bereich innerhalb des Arbeitsraumes mit einer besonderen Schutzummantelung versehen sein können, um dem Späneflug und vernebeltem Kühlschmiermittel besser widerstehen zu können, sind mittels einer abgedichteten Durchführung 42 in das Innere des Tragprofils 14 geführt.

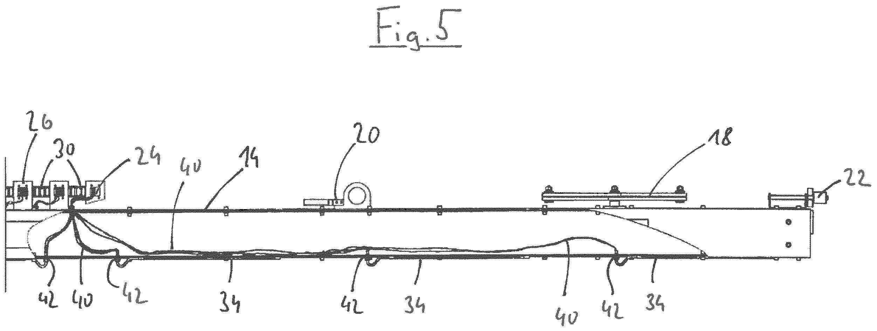

Wie aus Fig. 5 gut zu erkennen ist, sind von den Durchführungen 42 aus die elektrischen Zuleitungen 40 bis zu dem jeweiligen Tragprofil 14 zugeordneten Halterung 26 geführt, wo sie dann mit den in den Energieketten geführten elektrischen Leitungen verbunden sind. Fig. 5 zeigt nur einen Teilbereich einer Tragleiste 14 mit drei Beleuchtungseinrichtungen 34, so dass über die gesamte Länge der Tragleiste 14 fünf oder sechs Beleuchtungseinrichtungen vorgesehen sein können. Dabei ist es nicht erforderlich, dass an jeder Tragleiste Beleuchtungseinrichtungen vorgesehen sind, auch die Anzahl der Beleuchtungsvorrichtungen an den einzelnen Tragleisten kann unterschiedlich gewählt sein, beispielsweise weil aufgrund einer in dem Arbeitsraum angeordneten Werkzeugmaschine bestimmte Beleuchtungseinrichtungen im ausgefahrenen Zustand der Schutzabdeckung zu Schlagschatten führen würden, ohne die Bearbeitungsstelle besser auszuleuchten.

Es ist auch ohne weiteres möglich, die einzelnen Beleuchtungseinrichtungen 34 individuell anzusteuern, um so die Beleuchtung beispielsweise an unterschiedliche Werkstücke im Arbeitsraum der Werkzeugmaschine anzupassen und die bereits erwähnte Schlagschattenbildung zu vermeiden. Selbstverständlich lassen sich die gezeigten Beleuchtungseinrichtungen 34 auch mit transparenten Abdeckungen gemäß dem Stand der Technik kombinieren, sofern dies gewünscht ist.

Ein großer Vorteil der gezeigten und beschriebenen Schutzabdeckung besteht auch darin, dass nach dem vollständigen Einfahren der Schutzabdeckung 10 keine Teile der Beleuchtungseinrichtungen oder ihrer Zuleitungen im Dachbereich des Arbeitsraumes zurückbleiben, und so ein Beladen des Arbeitsraumes beispielsweise mittels eines Krans ohne Behinderung möglich ist.

## Patentansprüche

1. Längenvariable Schutzabdeckung (10) für Arbeitsräume von Werkzeugmaschinen mit einer Vielzahl von Tragleisten (14), die an wenigstens einer seitlichen Führungsschiene geführt sind, sowie zwischen den Tragleisten (14) vorgesehenen Abdeckelementen (16), die schlaufen-, falten- oder teleskopartig ausgebildet sind, um eine Längenänderung der Schutzabdeckung (10) zwischen einer eingefahrenen, komprimierten Stellung der Schutzabdeckung 10 und einer ausgefahrenen Schutzstellung zu ermöglichen, **dadurch gekennzeichnet, dass** wenigstens eine Tragleiste (14) mit einer Beleuchtungseinrichtung (34) versehen ist, die in die Richtung des Arbeitsraumes Licht abstrahlt.

2. Längenvariable Schutzabdeckung nach Anspruch 1, **dadurch gekennzeichnet, dass** die Beleuchtungseinrichtungen (34) als LED-Leisten oder einfache LED-Leuchten ausgebildet sind, die an der dem Arbeitsraum zugewandten Seite der jeweiligen Tragleisten (14) angeordnet sind.

3. Längenvariable Schutzabdeckung nach Anspruch 1 oder 2, **dadurch gekennzeichnet, dass** die Beleuchtungseinrichtungen (34) in die Tragleisten (14) eingelassen oder außen an diesen angebracht sind.

4. Längenvariable Schutzabdeckung nach Anspruch 1, **dadurch gekennzeichnet, dass** Lichtquellen auf der dem Arbeitsraum abgewandten Seite vorgesehen sind und die Lichtleitelemente das Licht durch die Tragprofile zum Arbeitsraum leiten.

5. Längenvariable Schutzabdeckung nach einem der vorhergehenden Ansprüche, **dadurch gekennzeichnet, dass** elektrische Zuleitungen (40) zu den Beleuchtungseinrichtungen (34) vorgesehen sind, die durch die Tragleisten von der geschützten Außenseite der Schutzabdeckung (10) zu den Beleuchtungseinrichtungen (34) geführt sind.

6. Längenvariable Schutzabdeckung nach Anspruch 5, **dadurch gekennzeichnet, dass** an einer Festanschlussseite (12) der Schutzabdeckung (10) ein Flansch mit einem elektrischen Anschluss (24) vorgesehen ist, von welchem aus flexible elektrische Leitungen zu den Tragleisten (14) vorgesehen sind, die mit Beleuchtungseinrichtungen (34) versehen sind.

7. Längenvariable Schutzabdeckung nach Anspruch 6, **dadurch gekennzeichnet, dass** mehrere flexible elektrische Leitungen in Reihe zwischen den Tragleisten (14) mit Beleuchtungseinrichtungen (34) vorgesehen sind.

8. Längenvariable Schutzabdeckung nach Anspruch 7, **dadurch gekennzeichnet, dass** die elektrischen Anschlussleitungen in biegeflexiblen Schutzummantelungen geführt sind.

9. Längenvariable Schutzabdeckung nach Anspruch 8, **dadurch gekennzeichnet, dass** die biegeflexiblen Schutzummantelungen in der Art von Energieführketten (30) mit einem Hohlraum ausgebildet sind, in dem die elektrischen Leitungen angeordnet sind.

10. Längenvariable Schutzabdeckung nach Anspruch 8 oder 9, **dadurch gekennzeichnet, dass** zwischen den einzelnen Schutzummantelungen an Tragleisten (14) Halterungen (26) vorgesehen sind, an denen elektrische Leitungen zu Beleuchtungseinrichtungen (34) abzweigen und / oder elektrische Verbindungen zu den elektrischen Leitungen in sich anschließenden weiteren Schutzummantelungen (30) vorgesehen sind.

11. Längenvariable Schutzabdeckung nach einem der vorhergehenden Ansprüche, **dadurch gekennzeichnet, dass** die Abdeckelemente (16) aus flexiblen Planen, Folien oder Geweben bestehen oder mehrlagig aus derartigen Materialien gebildet sind.

12. Längenvariable Schutzabdeckung nach einem der Ansprüche 1 bis 10, **dadurch gekennzeichnet, dass** die Abdeckelemente aus Lamellen bestehen, die mit ihren Schenkeln die Schenkel benachbarter Lamellen teleskopartig überlappen.

13. Längenvariable Schutzabdeckung nach einem der vorhergehenden Ansprüche, **dadurch gekennzeichnet, dass** die Beleuchtungseinrichtungen in den Tragleisten wenigstens teilweise individuell mit Hilfe einer geeigneten Steuerelektronik ansteuerbar sind.

14. Längenvariable Schutzabdeckung nach einem der vorhergehenden Ansprüche, **dadurch gekennzeichnet, dass** sie als Dachabdeckung mit zwei seitlichen Führungsschienen ausgebildet ist, deren Tragschienen (14) auf seitlichen Rollen (22) auf den Führungsschienen geführt sind, wobei zwischen den Tragleisten (14) flexible Abdeckelemente angebracht sind.

## Claims

1. Variable length protective cover (10) for working spaces of machine tools with a plurality of support strips (14), which are guided on at least one lateral guide rail, as well as cover elements (16) provided between the support strips (14), which cover elements are designed loop-like, fold-like or telescopically, in order to make possible a change in length of the protective cover (10) between a retracted, compressed position of the protective cover 10 and an extended protective position, **characterised in that** at least one support strip (14) is provided with an illumination device (34), which emits light in the direction of the working space.

2. Variable length protective cover according to claim 1, **characterised in that** the illumination devices (34) are designed as LED strips or simple LED lights, which are arranged on the side of the respective support strips (14) facing the working space.

3. Variable length protective cover according to claim 1 or 2, **characterised in that** the illumination devices (34) are embedded in the support strips (14) or affixed to the outside of these.

4. Variable length protective cover according to claim 1, **characterised in that** light sources are provided on the side facing away from the working space and the light guide elements guide the light through the support profiles to the working space.

5. Variable length protective cover according to any one of the preceding claims, **characterised in that** electrical supply lines (40) to the illumination devices (34) are provided, which are guided by the support strips from the protected outer side of the protective cover (10) to the illumination devices (34).

6. Variable length protective cover according to claim 5, **characterised in that** on a fixed connection side (12) of the protective cover (10) a flange with an electrical connection (24) is provided, from which flexible electrical lines to the support strips (14) are provided, which are provided with illumination devices (34).

7. Variable length protective cover according to claim 6, **characterised in that** a plurality of flexible electrical lines are provided in series between the support strips (14) with illumination devices (34).

8. Variable length protective cover according to claim 7, **characterised in that** the electrical connecting lines are guided in flexible protective sheaths.

9. Variable length protective cover according to claim 8, **characterised in that** the flexible protective sheaths are designed in the form of energy supply chains (30) with a cavity, in which the electrical lines are arranged.

10. Variable length protective cover according to claim 8 or 9, **characterised in that** between the individual protective sheaths on the support strips (14) holding means (26) are arranged, on which electrical lines branch off to illumination devices (34) and/or electrical connections to the electrical lines are provided in subsequent further protective sheaths (30).

11. Variable length protective cover according to any one of the preceding claims, **characterised in that** the cover elements (16) consist of flexible tarpaulins, foils or fabrics or are formed in multiple layers of such materials.

12. Variable length protective cover according to any one of claims 1 to 10, **characterised in that** the cover elements consist of lamellae, which with their legs telescopically overlap the legs of adjacent lamellae.

13. Variable length protective cover according to any one of the preceding claims, **characterised in that** the illumination devices in the support strips can at least partially be individually controlled by means of a suitable control electronics.

14. Variable length protective cover according to any one of the preceding claims, **characterised in that** it is designed as a roof cover with two lateral guide rails, the support rails (14) of which are guided on lateral rollers (22) on the guide rails, wherein flexible cover elements are applied between the support strips (14).

## Revendications

1. Capot de protection (10) de longueur variable, destiné à des espaces de travail de machines-outils et ayant plusieurs barres porteuses (14) qui sont guidées au niveau d'au moins un rail de guidage latéral ainsi que des éléments couvrants (16) qui sont prévus entre les barres porteuses (14) et qui sont conçus à la manière de boucles ou de plis ou télescopiques afin de permettre une modification de longueur du capot de protection (10) entre une position rentrée et comprimée du capot de protection 10 et une position de protection déployée, **caractérisé en ce qu'**au moins une barre porteuse (14) est munie d'un dispositif d'éclairage (34) qui projette de la lumière en direction de l'espace de travail.

2. Capot de protection de longueur variable selon la revendication 1, **caractérisé en ce que** les dispositifs d'éclairage (34) sont conçus comme des barrettes de LED ou comme des éclairages LED simples qui sont agencés du côté des barres porteuses (14) respectives qui est tourné vers l'espace de travail.

3. Capot de protection de longueur variable selon la revendication 1 ou 2, **caractérisé en ce que** les dispositifs d'éclairage (34) sont encastrés dans les barres porteuses (14) ou sont agencés à l'extérieur sur celles-ci.

4. Capot de protection de longueur variable selon la revendication 1, **caractérisé en ce que** des sources lumineuses sont prévues du côté éloigné de l'espace de travail et les éléments lumineux conduisent la lumière via les profilés porteurs jusqu'à l'espace de travail.

5. Capot de protection de longueur variable selon l'une quelconque des revendications précédentes, **caractérisé en ce qu'**il est prévu jusqu'aux dispositifs d'éclairage (34) des lignes d'alimentation électriques (40) qui sont guidées via les barres porteuses du côté extérieur protégé du capot de protection (10) aux dispositifs d'éclairage (34).

6. Capot de protection de longueur variable selon la revendication 5, **caractérisé en ce qu'**il est prévu du côté de rattachement fixe (12) du capot de protection (10) une bride avec un raccordement électrique (24) à partir de laquelle des lignes électriques souples sont prévues jusqu'aux barres porteuses (14) qui sont munies de dispositifs d'éclairage (34).

7. Capot de protection de longueur variable selon la revendication 6, **caractérisé en ce que** plusieurs lignes électriques souples sont prévues en série entre les barres porteuses (14) avec dispositifs d'éclairage (34).

8. Capot de protection de longueur variable selon la revendication 7, **caractérisé en ce que** les lignes de raccordement électriques sont guidées dans des gaines protectrices flexibles.

9. Capot de protection de longueur variable selon la revendication 8, **caractérisé en ce que** les gaines protectrices flexibles sont conçues à la manière de chaînes de transport d'énergie (30) avec un espace creux dans lequel sont agencées les lignes électriques.

10. Capot de protection de longueur variable selon la revendication 8 ou 9, **caractérisé en ce qu'**il est prévu entre les gaines protectrices individuelles, au niveau des barres porteuses (14), des fixations (26) au niveau desquelles des lignes électriques sont branchées vers des dispositifs d'éclairage (34) et/ou des liaisons électriques vers les lignes électriques sont prévues dans d'autres gaines protectrices (30) raccordées à la suite.

11. Capot de protection de longueur variable selon l'une quelconque des revendications précédentes, **caractérisé en ce que** les éléments couvrants (16) sont constitués de plaques, feuilles ou tissus souples ou sont formés de plusieurs couches de matières de ce type.

12. Capot de protection de longueur variable selon l'une quelconque des revendications 1 à 10, **caractérisé en ce que** les éléments couvrants sont constitués de lamelles dont les côtés recouvrent de manière télescopique les côtés de lamelles voisines.

13. Capot de protection de longueur variable selon l'une quelconque des revendications précédentes, **caractérisé en ce que** les dispositifs d'éclairage dans les barres porteuses peuvent être commandés au moins en partie individuellement à l'aide d'une électronique de commande appropriée.

14. Capot de protection de longueur variable selon l'une quelconque des revendications précédentes, **caractérisé en ce qu'**il est conçu sous la forme de capot de toit avec deux rails de guidage latéraux dont les rails porteurs (14) sont guidés sur des rouleaux latéraux (22) sur les rails de guidage, des éléments couvrants souples étant agencés entre les barres porteuses (14).
